# EUROPÄISCHE PATENTSCHRIFT

(11) **EP 4 299 885 B1**
(45) Veröffentlichungstag und Bekanntmachung des Hinweises auf die Patenterteilung: **30.04.2025**
(21) Anmeldenummer: 23181183.7
(22) Anmeldetag: 23.06.2023
(51) Int. Cl.: F01N 3/04

(54) **SYSTEM UND VERFAHREN ZUM ÜBERWACHEN EINER ABGASREINIGUNGSANLAGE**
SYSTEM AND METHOD FOR MONITORING AN EXHAUST GAS PURIFICATION SYSTEM
SYSTÈME ET PROCÉDÉ DE SURVEILLANCE D'UN SYSTÈME DE PURIFICATION DE GAZ D'ÉCHAPPEMENT

(30) Priorität: 30.06.2022 DE 102022116382
(43) Veröffentlichungstag der Anmeldung: 03.01.2024
(73) Patentinhaber: SICK AG, 79183 Waldkirch (DE)
(72) Erfinder: WÜST, Jochen, 79186 Waldkirch (DE); HENGSTENBERG, Andreas, 23858 Reinfeld (DE); BRUMM, Hinrich, 25474 Ellerbek (DE); SCHINDLER, Paul, 79104 Freiburg (DE); CARDENAS, Diana Lopez, 22399 Hamburg (DE); BLASCHTSCHAK, Julian, 22043 Hamburg (DE)
(74) Vertreter: Manitz Finsterwald Patent- und Rechtsanwaltspartnerschaft mbB

(56) Entgegenhaltungen:
- EP-A1- 2 955 345
- KR-A- 20210 155 464
- KR-A- 20220 074 123

## Beschreibung

Die Erfindung betrifft ein System und ein Verfahren zum Überwachen der Funktionalität einer Abgasreinigungsanlage, die mit einer Emissionsquelle, insbesondere mit einem Schiffsmotor, verbunden ist.

Gemäß dem MARPOL-Übereinkommen (Internationales Übereinkommen zur Verhütung der Meeresverschmutzung durch Schiffe, engl.: International Convention for the Prevention of Marine Pollution from Ships) und gemäß weiteren lokalen Richtlinien müssen Schiffe heutzutage die Einhaltung geforderter Emissionsgrenzwerte nachweisen. Dies kann über den Einsatz von Abgasreinigungsanlagen erfolgen, die z.B. sogenannte "Scrubber" umfassen, wobei ausgestoßene Emissionen mit Emissionsmessgeräten dokumentiert werden. Alternativ kann hochwertiger und damit teurer Kraftstoff während des Betriebs des Schiffs verwendet und dessen Verwendung nachgewiesen werden.

Wenn die Abgasreinigungsanlage und/oder die Emissionsmessgeräte nicht verfügbar oder nicht betriebsbereit sind, muss oftmals eine manuelle Dokumentation und eine anschließende Bewertung durch einen Fachmann erfolgen. Bei einem Ausfall einer Abgasreinigungsanlage und/oder von Emissionsmessgeräten ist die Dokumentation gegenüber Dritten, d.h. gegenüber einem Flaggenstaat während einer Schiffsreise, jedoch entweder sehr aufwändig und mit erhöhten Kosten verbunden oder im Extremfall nicht durchführbar. Darüber hinaus ist eine Reparatur von Abgasreinigungsanlagen und/oder Emissionsmessgeräten durch eine entsprechende Fachkraft während einer Reise selten oder überhaupt nicht möglich. Ein Zeitraum ohne Nachweis der korrekten Funktionalität der Abgasreinigungsanlagen erhöht generell das Kostenrisiko für den entsprechenden Schiffstransport, da beispielsweise Strafzahlungen anfallen können oder ein besonders sauberer Kraftstoff verwendet werden muss.

Um Schwierigkeiten aufgrund des fehlenden Nachweises der Emissionen von Abgasreinigungsanlagen zu reduzieren, können redundante Emissionsmessgeräte verwendet werden. Diese erfordern jedoch entsprechend höhere Anschaffungs- und Betriebskosten.

Der Nachweis einer korrekten Funktionsweise der Abgasreinigungsanlage eines Schiffs ist häufig von den Messwerten eines einzelnen Sensors abhängig, beispielsweise eines Abgassensors am Ausgang eines Scrubbers. Wenn ein solcher Abgassensor ausfällt oder fehlerhafte Messwerte liefert, wird der Betrieb der Abgasreinigungsanlage folglich als fehlerhaft angesehen. In einem Hafen in der Nähe der momentanen Position des Schiffs wird dann üblicherweise möglichst bald eine Reparatur des Abgassensors durchgeführt.

Es ist jedoch möglich, dass die Abgasreinigungsanlage auch bei einem Ausfall des Abgassensors weiterhin korrekt arbeitet und ihre Emissionswerte unterhalb vorgegebener Grenzwerte liegen. Wenn ein solcher Betrieb mit geringen Emissionswerten beispielsweise trotz Ausfall oder fehlerhafter Messwerte des Abgassensors nachweisbar wäre, könnte ein reibungsloserer Betrieb der Abgasreinigungsanlage und damit des gesamten Schiffs erfolgen.

Aus der KR 2021 0155464 A sind ein System und ein Verfahren mit den Merkmalen gemäß dem jeweiligen Oberbegriff der unabhängigen Ansprüche bekannt.

Eine Aufgabe der Erfindung besteht darin, ein Verfahren und ein System zu schaffen, mit denen ein korrekter Betrieb einer Abgasreinigungsanlage selbst bei einer Fehlfunktion eines ihrer Sensoren sichergestellt wird.

Diese Aufgabe wird durch ein System und ein Verfahren mit den Merkmalen der unabhängigen Ansprüche gelöst. Vorteilhafte Weiterbildungen der Erfindung sind in den Unteransprüchen, der Beschreibung und den Zeichnungen angegeben.

Das System ist zum Überwachen einer Abgasreinigungsanlage vorgesehen, die mit einer Emissionsquelle funktional verbunden ist, bei der es sich insbesondere um einen Schiffsmotor handelt. Das System umfasst einen Emissionssensor, der ein Emissionssignal erfasst, das Emissionen der Emissionsquelle bei dem Austreten aus der Abgasreinigungsanlage angibt, mehrere weitere Sensoren, die jeweilige mit der Abgasreinigungsanlage in Beziehung stehende Messsignale ausgeben, und eine elektronische Verarbeitungseinheit. Die Verarbeitungseinheit ist ausgebildet, um anhand der Messsignale der weiteren Sensoren einen Prozesszustand der Abgasreinigungsanlage zu ermitteln, um das Emissionssignal und den Prozesszustand jeweils bezüglich einer Anomalie zu bewerten. Ferner ist die Verarbeitungseinheit ausgebildet, um einen konformen Emissionszustand der Abgasreinigungsanlage dann zu ermitteln und auszugeben, wenn keine Anomalie des Emissionssignals vorliegt, und dann, wenn eine Anomalie des Emissionssignals vorliegt, während gleichzeitig keine Anomalie des Prozesszustands ermittelt vorliegt oder die Anomalie des Emissionssignals einer Ausnahmebedingung genügt.

Die Abgasreinigungsanlage ist beispielsweise in bzw. auf einem Schiff installiert und kann daher einen sogenannten Scrubber zum Reinigen von Abgas eines Schiffsmotors umfassen. Ein erster Typ eines solchen Scrubbers, der auch als Nass-Scrubber bezeichnet wird, verwendet Waschwasser, das üblicherweise aus dem Meer oder einem anderen Gewässer entnommen und zur Abgasreinigung durch den Scrubber geleitet wird. Alternativ können zur Abgasreinigung auf Schiffen Trocken-Scrubber eingesetzt werden, bei denen ein Kalkgranulat anstelle des Waschwassers verwendet wird. Darüber hinaus sind beispielsweise auch sogenannte Denox-Scrubber zur Abgasreinigung auf Schiffen im Einsatz. Der Begriff "Denox" bezieht sich auf das Entfernen von Stickstoffoxiden (NOₓ) aus dem Abgas des Schiffsmotors. Das Entfernen von Stickstoffoxiden kann bei einem Denox-Scrubber auf ähnliche Weise erfolgen wie bei Abgasen von Kraftfahrzeugen, die einen Katalysator verwenden.

Mit Hilfe eines Scrubbers können meistens mehrere unterschiedliche Stoffe aus dem Abgas des Schiffsmotors entfernt werden. Beispielsweise sind die vorstehend genannten Nass- und Trocken-Scrubber zwar hauptsächlich zum Entfernen von Schwefel vorgesehen, sie eignen sich jedoch auch für Ruß und Stickstoffoxide. Umgekehrt kann ein Denox-Scrubber je nach Bauart neben Stickstoffoxiden weitere Stoffe aus dem Abgas entfernen, beispielsweise Schwefel und Ruß.

Der Emissionssensor detektiert die Emissionen im Abgas nach der Reinigung mittels der Abgasreinigungsanlage. Zusätzlich gibt es die weiteren Sensoren, die mit der Abgasreinigungsanlage in Beziehung und somit mit dem Emissionszustand in Zusammenhang stehen. Die weiteren Sensoren erfassen beispielsweise bei einem Nass-Scrubber den pH-Wert des Waschwassers und/oder Prozessparameter des Scrubbers sowie des Schiffsmotors. Bei Trocken- und Denox-Scrubbern können auf ähnliche Weise Prozessparameter des jeweiligen Scrubbers mittels der weiteren Sensoren erfasst werden, die zusätzlich zu dem Emissionssensor vorgesehen sind. Die weiteren Sensoren können den Zustand eines jeweiligen Mediums erfassen, das zum Reinigen des Abgases in dem jeweiligen Scrubber-Typ verwendet wird.

Die Emissionen der Emissionsquelle, beispielsweise des Schiffsmotors, können durch eine Massen- und/oder Volumenkonzentration, eine Menge oder eine Masse eines oder mehrerer Gase definiert sein, die nach der Reinigung mittels der Abgasreinigungsanlage gemessen werden. Die Emissionen werden beispielsweise durch die SO₂-Konzentration und/oder die CO₂-Konzentration im Abgas in ppm oder Vol.-% repräsentiert.

Wenn die Abgasreinigungsanlage in einem Schiff installiert ist, umfasst diese eine Einrichtung zur Aufbereitung des Wassers, das durch den Scrubber geleitet wird, um das Wasser anschließend wieder dem Meer bzw. Gewässer zuführen zu können. In diesem Fall können einige der weiteren Sensoren an oder in der Einrichtung zur Aufbereitung des Wassers installiert sein, um beispielsweise deren Temperatur oder Wasserdurchsatz zu erfassen. Ferner können die weiteren Sensoren auch einen Sensor umfassen, der den Zustand des Wassers nach der Aufbereitung und vor der Rückführung in das Meer bzw. Gewässer angibt.

Außerdem können die weiteren Sensoren solche Sensoren umfassen, die indirekt mit der Abgasreinigungsanlage in Beziehung stehen und beispielsweise an oder in Komponenten eines Schiffs installiert sind, welche die Abgasmenge festlegen, die von der Abgasreinigungsanlage aufgenommen wird. Solche weiteren Sensoren können beispielsweise ein Sensor für die Motorleistung und/oder weitere Parameter des Schiffsmotors sowie Sensoren sein, welche die Geschwindigkeit und die Beschleunigung des Schiffs erfassen.

Die Messsignale der weiteren Sensoren definieren jeweils einen Prozessparameter, welcher der Messgröße entspricht, die durch das jeweilige Messsignal repräsentiert wird. Die Gesamtheit dieser Prozessparameter beschreibt den Prozesszustand der Abgasreinigungsanlage, d.h. ähnlich wie Komponenten eines Vektors, der den Prozesszustand darstellt. Die Anomalie des Emissionssignals und des Prozesszustands wird jeweils ermittelt, indem das Emissionssignal und die Messsignale der weiteren Sensoren mit jeweiligen Gültigkeitskriterien verglichen werden. Wenn das Emissionssignal bzw. eines der Messsignale der weiteren Sensoren dem jeweiligen Gültigkeitskriterium nicht entspricht, kann eine Anomalie des Emissionssignals bzw. des Prozesszustands vorliegen. Beispielsweise kann eine Anomalie des Emissionssignals vorliegen, wenn dieses oberhalb eines gesetzlich vorgegebenen Grenzwerts liegt. Ferner kann die Anomalie des Emissionssignals umfassen, dass ermittelt wird, dass der Emissionssensor ausgefallen ist oder einen sinnlosen oder zweifelhaften Wert ausgibt. In diesem Fall wird der Prozesszustand bewertet, um feststellen zu können, ob trotz der Anomalie des Emissionssensors eine korrekte Funktionalität der Abgasreinigungsanlage und ein konformer Emissionszustand vorliegen.

Die elektronische Verarbeitungseinheit ermittelt somit eine Anomalie des Emissionssignals, wenn das Emissionssignal das vorbestimmte Gültigkeitskriterium oder eine Kombination vorbestimmter Gültigkeitskriterien nicht erfüllt. Dies kann der Fall sein, wenn der Emissionssensor ausfällt oder systematische Messfehler auftreten, wie beispielsweise eine Drift oder Sprünge. Ferner liegt das Emissionssignal oberhalb des vorbestimmten Gültigkeitsbereichs, wenn beispielsweise ein Scrubber der Abgasreinigungsanlage eines Schiffs nicht korrekt funktioniert und die Menge der ausgestoßenen Emissionen einen vorgegebenen Grenzwert überschreitet.

Ferner ermittelt die elektronische Verarbeitungseinheit, ob eine ausreichende Anzahl gültiger Prozessparameter ermittelt werden kann, die anhand der Messsignale der weiteren Sensoren bestimmbar sind und somit den Prozesszustand beschreiben. Ist dies der Fall, ermittelt die elektronische Verarbeitungseinheit, ob die Prozessparameter jeweils den vorbestimmten Gültigkeitskriterien genügen.

Die Ermittlung und die Ausgabe des konformen Emissionszustands kann im einfachsten Fall umfassen, dass lediglich angegeben wird, dass die momentane Emissionsmenge der Abgasreinigungsanlage unterhalb eines gesetzlich vorgeschriebenen Grenzwerts liegt. Alternativ oder zusätzlich kann jedoch eine ermittelte Emissionsmenge wie beispielsweise Schwefel quantitativ angegeben werden. Der Begriff "konform" bezieht sich im Zusammenhang mit dem Emissionszustand darauf, dass die ermittelte Emissionsmenge gesetzlichen Vorgaben genügt und beispielsweise unterhalb des Grenzwerts liegt, der in einem Flaggenstaat jeweils vorgegeben ist.

Ein Vorteil des Systems und des nachstehend beschriebenen Verfahrens besteht darin, dass der Emissionszustand der Abgasreinigungsanlage auch dann ermittelt und ausgegeben werden kann, wenn eine Anomalie des Emissionssignals vorliegt, beispielsweise bei einem Ausfall des Emissionssensors oder bei einem fehlerhaften Emissionssignal. Dadurch kann die Zeitdauer maximiert werden, während derer eine korrekte Funktion der Abgasreinigungsanlage nachweisbar ist.

Somit kann der Betrieb der Abgasreinigungsanlage selbst dann fortgesetzt werden, wenn eine Anomalie des Emissionssignals bzw. des Emissionssensors vorliegt und diese mittels der Messsignale der weiteren Sensoren bei der Ermittlung des konformen Emissionszustands kompensiert werden kann. Dadurch können durch das System bzw. durch die Anwendung des Verfahrens unerwünschte Betriebsunterbrechungen, beispielsweise während einer Schiffsreise, vermieden werden, solange der Prozesszustand die Ermittlung des konformen Emissionszustands zulässt, beispielsweise anhand der Messsignale der weiteren Sensoren.

Dies führt zu einem verbesserten Informationszustand über die korrekte Funktion der Abgasreinigungsanlage. Zusatzkosten, die im Zusammenhang mit Störungen der Abgasreinigungsanlage auftreten, können so verringert werden, da beispielsweise die Häufigkeit von manuellen Dokumentationen des Emissionszustands verringert wird und redundante Emissionsgeräte nicht erforderlich sind. Insgesamt wird die Zuverlässigkeit für den Nachweis des Emissionszustands der Abgasreinigungsanlage mittels des Verfahrens verbessert. Darüber hinaus ist die Verwendung von teurem Kraftstoff zum Betreiben von Schiffen nicht unbedingt erforderlich. Da der Prozesszustand der Abgasreinigungsanlage anhand der Messsignale der mehreren weiteren Sensoren ermittelt wird, können ferner Fehlfunktionen der Abgasreinigungsanlage frühzeitig erkannt und beispielsweise mittels eines Warnsystems gemeldet werden.

Gemäß einer Ausführungsform kann die Ausnahmebedingung umfassen, dass das Emissionssignal für weniger als eine vorbestimmte Zeitdauer von einem Normalzustand abweicht, der durch ein Gültigkeitskriterium für das von dem Emissionssensor erfasste Emissionssignal festgelegt ist. Durch die zeitliche Begrenzung der Ausnahmebedingung kann die Menge unerwünschter Emissionen verringert werden, die zwar in vielen Fällen von Gesetzgebern für eine solche Ausnahmebedingung toleriert werden, aber dennoch eine Belastung für die Umwelt darstellen.

Die Festlegung des jeweiligen Gültigkeitskriteriums, d.h. für das Emissionssignal und für die vorstehend genannten Signale der weiteren Sensoren, die den Prozesszustand definieren, kann direkt oder indirekt anhand eines oder mehrerer Gültigkeitskriterien für die Messsignale des Emissionssensors und der anderen Sensoren erfolgen. Die Gültigkeitskriterien können beispielsweise einen unteren und einen oberen Grenzwert für das jeweilige Messsignal umfassen.

Wenn eine Anomalie des Prozesszustands ermittelt wird und die Anomalie des Emissionssignals der Ausnahmebedingung nicht genügt, kann die elektronische Verarbeitungseinheit eine spezifische Fehlermeldung ausgeben. Die Ausgabe der spezifischen Fehlermeldung ermöglicht eine frühzeitige Erkennung von Fehlfunktionen der Abgasreinigungsanlage.

Gemäß einer weiteren Ausführungsform berechnet die elektronische Verarbeitungseinheit anhand der Messsignale der weiteren Sensoren ein Ersatzsignal für das Emissionssignal, wenn eine Anomalie des Emissionssignals vorliegt, während keine Anomalie des Prozesszustands ermittelt wird. Ferner kann die elektronische Verarbeitungseinheit den konformen Emissionszustand anhand des Ersatzsignals ermitteln, wenn eine Anomalie des Emissionssignals vorliegt, während keine Anomalie des Prozesszustands ermittelt wird. Ansonsten, d.h. wenn keine Anomalie des Emissionssignals ermittelt wird, wird der Emissionszustand anhand des Emissionssignals ermittelt.

Anhand des Ersatzsignals kann der konforme Emissionszustand der Abgasreinigungsanlage somit auch dann ermittelt werden, wenn eine Anomalie des Emissionssignals vorliegt, beispielsweise bei einem Ausfall des Emissionssensors. Bei einem solchen Ausfall des Emissionssensors bzw. einer anderen Anomalie des Emissionssignals bzw. Emissionssensors kann somit mittels des Ersatzsignals eine korrekte Funktion der Abgasreinigungsanlage mit Emissionen unterhalb zulässiger Grenzwerte nachgewiesen werden. Wenn die Abgasreinigungsanlage in einem Schiff installiert ist, kann daher selbst bei einem Ausfall des Emissionssensors eine Schiffsreise ohne Unterbrechung bis zu einem geplanten Zielhafen fortgesetzt werden. Dadurch können wiederum Aufwände durch ungeplante Hafenaufenthalte vermieden werden.

Die Ermittlung des Ersatzsignals anhand der Messsignale der weiteren Sensoren kann durch ein Prädiktionsverfahren erfolgen, bei dem beispielsweise ein Algorithmus des maschinellen Lernens verwendet wird, der durch ein Regressionsmodell, z.B. durch ein neuronales Netz, realisiert sein kann. Die Lernphase eines solchen neuronalen Netzes kann beispielsweise während des korrekten Betriebs des Emissionssensors durchgeführt werden, bei dem ein konformer Emissionszustand vorliegt. Bei der Verwendung eines solchen neuronalen Netzes kann ferner ein Berechnungsmodell verwendet werden, das den Prozesszustand der Abgasreinigungsanlage und das Ersatzsignal für das Emissionssignal mit den Messsignalen der weiteren Sensoren verknüpft. Während des Betriebs der Abgasreinigungsanlage kann ein solches Berechnungsmodell darüber hinaus adaptiv angepasst werden.

Außerdem können für das Emissionssignal und zumindest einige Prozessparameter, die den Prozesszustand beschreiben, anhand von Berechnungsmodellen Vergleichsdaten ermittelt werden, beispielsweise ebenfalls durch ein Prädiktionsverfahren unter Verwendung eines Regressionsmodells. Dadurch lässt sich die Zuverlässigkeit des ausgegebenen Emissionszustands und der Abgasreinigungsanlage insgesamt verbessern, denn anhand der Vergleichsdaten ist wiederum eine frühzeitige Erkennung von Fehlfunktionen möglich.

Gemäß einer anderen Ausführungsform kann die elektronische Verarbeitungseinheit die Anzahl gültiger Prozessparameter ermitteln, die anhand der Messsignale der weiteren Sensoren bestimmbar sind und somit den Prozesszustand beschreiben. Eine Anomalie des Prozesszustands kann mittels der elektronischen Verarbeitungseinheit nur dann ermittelt werden, wenn die Anzahl der gültigen Prozessparameter größer als ein vorbestimmter Wert ist. Ansonsten gibt die elektronische Verarbeitungseinheit eine spezifische Fehlermeldung aus. Die Anzahl gültiger Prozessparameter kann beispielsweise dadurch ermittelt werden, dass die einzelnen Signale für jeden der weiteren Sensoren evaluiert werden, beispielsweise durch einen Vergleich mit jeweiligen Gültigkeitskriterien. Somit ist bei dieser Ausführungsform eine Mindestanzahl gültiger Prozessparameter erforderlich, um einen Prozesszustand ohne Anomalie nachzuweisen. Die Mindestanzahl gültiger Prozessparameter kann darüber hinaus eine Voraussetzung für die Ermittlung des vorstehend beschriebenen Ersatzsignals für das Emissionssignal sein. Die Bedingung, dass eine ausreichende Anzahl gültiger Prozessparameter zu ermitteln ist, erhöht wiederum die Zuverlässigkeit bei der Ermittlung des akzeptierbaren Emissionszustands der Abgasreinigungsanlage.

Ferner kann die elektronische Verarbeitungseinheit die Ermittlung und die Ausgabe des Emissionszustands unterdrücken, wenn sie einen nicht bewertbaren Betriebszustand der Abgasreinigungsanlage anhand zumindest eines der Messsignale der weiteren Sensoren ermittelt. In diesem Fall kann eine spezifische Fehlermeldung für den nicht bewertbaren Betriebszustand ausgegeben werden. Der nicht bewertbare Betriebszustand kann beispielsweise einen Zustand mit ausgeschaltetem Scrubber der Abgasreinigungsanlage eines Schiffs und/oder mit ausgeschaltetem Schiffsmotor umfassen. Außerdem kann der nicht bewertbare Betriebszustand einen Betriebsübergang umfassen, beispielsweise einen Neustart eines zuvor abgeschalteten Scrubbers. Durch das Erkennen des nicht bewertbaren Betriebszustands anhand des Messsignals eines der weiteren Sensoren kann vermieden werden, dass ein nicht zutreffender Emissionszustand für die Emissionsquelle ausgegeben wird.

Gemäß einer anderen Ausführungsform umfasst das System einen weiteren Emissionssensor, der ein weiteres Emissionssignal erfasst, welches ebenso wie das zuvor erwähnte, ursprüngliche Emissionssignal mittels der elektronischen Verarbeitungseinheit bezüglich der Anomalie bewertet wird. Bei dieser Ausführungsform werden folglich die Signale zumindest zweier Emissionssensoren berücksichtigt, wobei die Bewertung bezüglich der Anomalie des jeweiligen Emissionssignals iterativ erfolgen kann. Durch die Berücksichtigung des weiteren Emissionssignals wird die Zuverlässigkeit des akzeptierbaren Emissionszustands der Abgasreinigungsanlage, der von dem Verfahren ausgegeben wird, weiter erhöht. Der konforme Emissionszustand der Abgasreinigungsanlage wird nämlich bei dieser Ausführungsform dann ermittelt und ausgegeben, wenn keine Anomalie der Emissionssignale vorliegt oder (d.h. dann) wenn eine Anomalie zumindest eines der Emissionssignale vorliegt, während gleichzeitig keine Anomalie des Prozesszustands ermittelt wird oder die Anomalie des der Emissionssignale einer jeweiligen Ausnahmebedingung genügt.

Die elektronische Verarbeitungseinheit kann darüber hinaus ausgebildet sein, um das vorstehend beschriebene Prädiktionsverfahren für ein Ersatzsignal des Emissionssignals und/oder für Vergleichsdaten auszuführen, beispielsweise unter Verwendung eines Algorithmus des maschinellen Lernens, der mittels eines Regressionsmodells implementiert sein kann.

Darüber hinaus betrifft die Erfindung ein Verfahren zum Überwachen einer Abgasreinigungsanlage, die mit einer Emissionsquelle funktional verbunden ist, bei der es sich insbesondere um einen Schiffsmotor handelt. Gemäß dem Verfahren wird zunächst ein Emissionssignal mittels eines Emissionssensors erfasst, welches Emissionen der Emissionsquelle bei dem Austreten aus der Abgasreinigungsanlage angibt. Zusätzlich werden Messsignale, die jeweils mit der Abgasreinigungsanlage in Beziehung stehen, von mehreren weiteren Sensoren erfasst. Anhand der Messsignale der weiteren Sensoren wird ein Prozesszustand der Abgasreinigungsanlage ermittelt.

Anschließend werden das Emissionssignal und der Prozesszustand jeweils bezüglich einer Anomalie bewertet. Ein konformer Emissionszustand der Abgasreinigungsanlage wird entweder dann ermittelt und ausgegeben, wenn keine Anomalie des Emissionssignals vorliegt, oder dann, wenn eine Anomalie des Emissionssignals vorliegt, während jedoch gleichzeitig entweder keine Anomalie des Prozesszustands ermittelt wird oder die Anomalie des Emissionssignals einer Ausnahmebedingung genügt.

Das vorstehend beschriebene System umfasst folglich den Emissionssensor, die mehreren weiteren Sensoren und die elektronische Verarbeitungseinheit, welche zusammen die Schritte des Verfahrens ausführen. Die vorstehenden Ausführungen zu dem erfindungsgemäßen System gelten somit auch für das erfindungsgemäße Verfahren, insbesondere hinsichtlich der Offenbarung, der Vorteile und der bevorzugten Ausführungsformen.

Nachfolgend wird die Erfindung beispielhaft anhand einer vorteilhaften Ausführungsform unter Bezugnahme auf die beigefügten Figuren beschrieben. Es zeigen, jeweils schematisch:
- Fig. 1: eine Abgasreinigungsanlage eines Schiffs und
- Fig. 2: ein Flussdiagramm eines Verfahrens zum Überwachen des Emissionszustands der Abgasreinigungsanlage von Fig. 1.

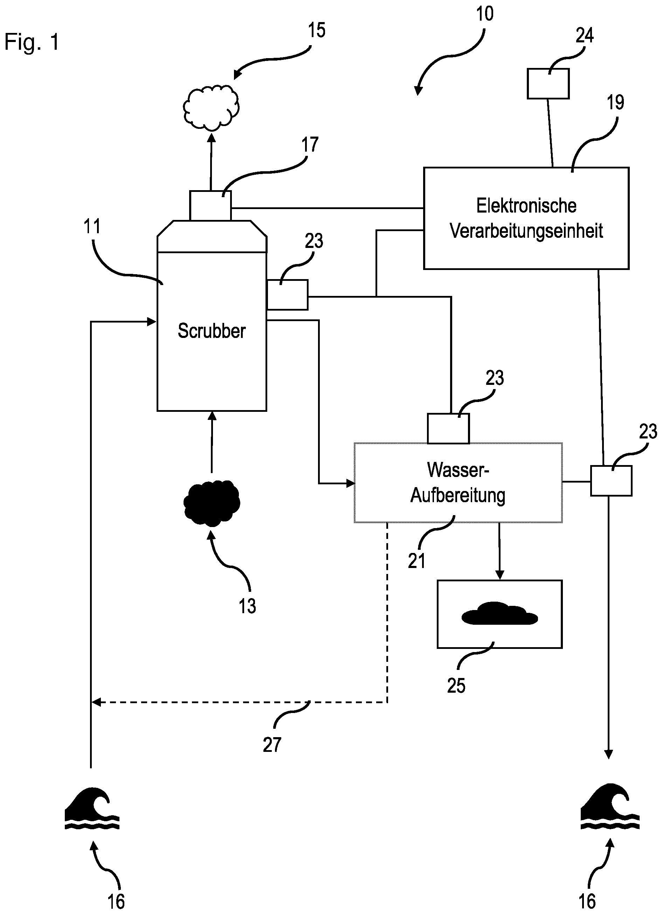

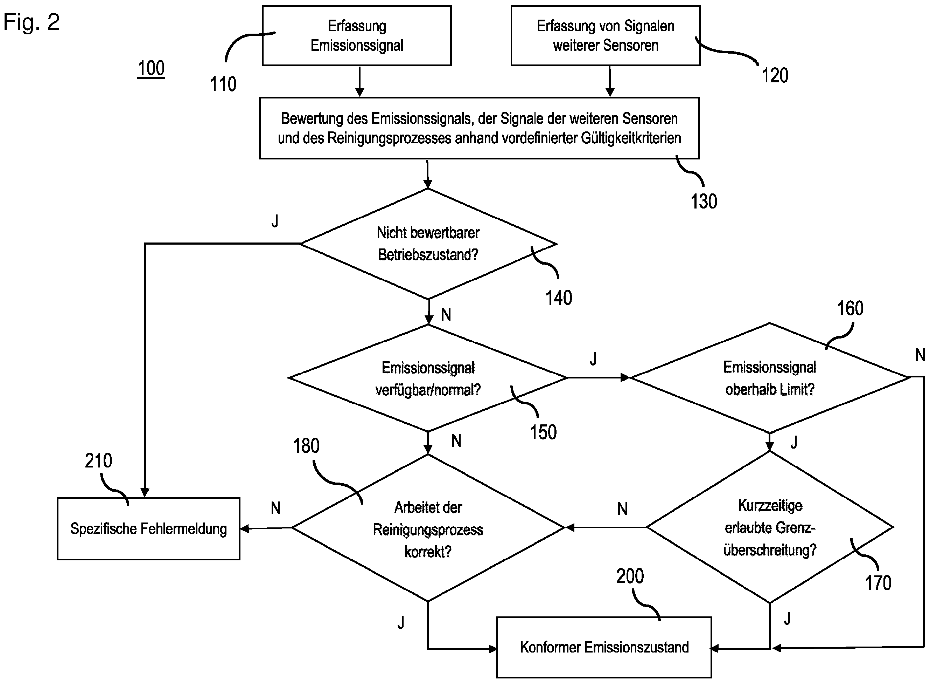

Fig. 1 zeigt schematisch eine Abgasreinigungsanlage 10 eines Schiffs. Die Abgasreinigungsanlage 10 umfasst ein erfindungsgemäßes System, das zum Ausführen eines Verfahrens 100 (vgl. Fig. 2) zum Überwachen des Emissionszustands der Abgasreinigungsanlage 10 vorgesehen ist.

Die Abgasreinigungsanlage 10 weist einen Scrubber 11 auf, der unbehandeltes Abgas 13 aufnimmt, das von einem nicht gezeigten Motor des Schiffs ausgestoßen wird. In dem Scrubber 11 wird das unbehandelte Abgas 13 gereinigt und anschließend als gereinigtes Abgas 15 aus dem Scrubber 11 in die Atmosphäre ausgestoßen. Zur Reinigung des unbehandelten Abgases 13 wird Meerwasser 16 in den Scrubber 11 geleitet. Mit Hilfe des Meerwassers 16 werden bestimmte Bestandteile des unbehandelten Abgases 13 wie beispielsweise Schwefel aus dem unbehandelten Abgas 13 herausgewaschen.

Die Abgasreinigungsanlage 10 umfasst ferner einen Emissionssensor, der als Abgassensor 17 ausgebildet ist und die Zusammensetzung des gereinigten Abgases 15 überwacht. Dies betrifft insbesondere den Schwefelgehalt des gereinigten Abgases 15. Ferner umfasst die Abgasreinigungsanlage 10 eine elektronische Verarbeitungseinheit 19, eine Einrichtung 21 zur Wasseraufbereitung und weitere Sensoren 23, 24, von denen die Sensoren 23 mit der Abgasreinigungsanlage 10 in direktem Kontakt stehen, während die Sensoren 24 zum Erfassen von Messsignalen vorgesehen sind, welche die Abgasreinigungsanlage 10 direkt oder indirekt beeinflussen.

Konkret sind die Sensoren 24 dafür vorgesehen, die Motorleistung und weitere Parameter des nicht gezeigten Schiffsmotors zu erfassen. Zusätzlich umfassen die Sensoren 24 solche Sensoren, welche die Geschwindigkeit und die Beschleunigung sowie weitere Betriebsgrößen des Schiffs angeben. Die Drehzahl des Schiffsmotors und die Beschleunigung des Schiffs sind beispielsweise indirekte Indikatoren für die Menge des unbehandelten Abgases 13, das von dem Scrubber 11 aufgenommen wird.

Die Einrichtung 21 zur Wasseraufbereitung nimmt das Waschwasser auf, das zuvor durch den Scrubber 11 geleitet wird. Die Einrichtung 21 zur Wasseraufbereitung ist mit einem Schlammbehälter 25 verbunden, der Stoffe aufnimmt, welcher von der Einrichtung 21 zur Wasseraufbereitung aus dem Waschwasser herausgefiltert wird, das die Einrichtung 21 zur Wasseraufbereitung von dem Scrubber 11 empfängt. Weitere Details einer solchen Einrichtung 21 zur Wasseraufbereitung, die in einer Abgasreinigungsanlage 10 für Schiffe verwendet wird, sind in der Technik bekannt und werden im Folgenden nicht weiter beschrieben.

Der Emissions- bzw. Abgassensor 17 und die weiteren Sensoren 23, 24 sind mit der elektronischen Verarbeitungseinheit 19 kommunikativ gekoppelt. Die elektronische Verarbeitungseinheit 19 empfängt somit ein Emissionssignal des Emissions- bzw. Abgassensors 17 und Messsignale der weiteren Sensoren 23, 24. Die Sensoren 23, die mit der Abgasreinigungsanlage 10 direkt in Kontakt stehen, messen Betriebsparameter des Scrubbers 11, wie beispielsweise dessen Temperatur und/oder Innendruck, und Betriebsparameter der Einrichtung 21 zur Wasseraufbereitung, wie beispielsweise deren Temperatur, Wasserdurchsatz etc.

Darüber hinaus sind weitere der Sensoren 23 dafür vorgesehen, den Zustand des Waschwassers zu erfassen, nachdem dieses aus der Einrichtung 21 zur Wasseraufbereitung austritt und letztlich wieder dem Meerwasser 16 zugeführt wird. Der Zustand des Waschwassers lässt sich beispielsweise durch dessen Trübung und/oder dessen Säuregehalt oder pH-Wert erfassen, so dass anhand dieses Zustands ein entsprechendes Messsignal abgeleitet werden kann.

Die Abgasreinigungsanlage 10 weist optional eine Rückführung 27 für gereinigtes Waschwasser auf, das von der Einrichtung 21 zur Wasseraufbereitung wieder zum Scrubber 11 zurückgeführt wird. In diesem Fall weist die Abgasreinigungsanlage 10 einen geschlossenen Kreislauf für das Waschwasser auf ("Closed-Loop Scrubber"). Alternativ weist die Abgasreinigungsanlage 10 die Rückführung 27 für das Waschwasser nicht auf ("Open-Loop Scrubber").

Als Alternative zu dem Scrubber 11, der das Meerwasser 16 bzw. Waschwasser verwendet, kann die Abgasreinigungsanlage 10 einen Trocken-Scrubber oder einen Denox-Scrubber aufweisen. Der Trocken-Scrubber verwendet ein Kalkgranulat anstelle des Waschwassers, während sich Begriff "Denox" auf das Entfernen von Stickstoffoxiden (NOₓ) aus dem Abgas 13 des Schiffsmotors bezieht. Das Entfernen von Stickstoffoxiden kann bei einem solchen Denox-Scrubber auf ähnliche Weise erfolgen wie bei Abgasen von Kraftfahrzeugen, die einen Katalysator verwenden.

Mit Hilfe des Scrubbers 11 können meistens mehrere unterschiedliche Stoffe aus dem Abgas 13 des Schiffsmotors entfernt werden. Beispielsweise sind der Scrubber 11 von Fig. 1, der das Meerwasser 16 verwendet, und die Trocken-Scrubber zwar hauptsächlich zum Entfernen von Schwefel vorgesehen, sie eignen sich jedoch auch für Ruß und Stickstoffoxide. Umgekehrt kann ein Denox-Scrubber je nach Bauart neben Stickstoffoxiden weitere Stoffe aus dem Abgas entfernen, beispielsweise Schwefel und Ruß.

Bei Trocken- und Denox-Scrubbern können die weiteren Sensoren 23 ebenfalls direkt mit dem jeweiligen Scrubber verbunden sind, um Betriebsparameter des Scrubbers wie beispielsweise dessen Temperatur und/oder Innendruck und/oder einen Zustand eines jeweiligen Mediums zur Reinigung des Abgases 13 zu erfassen.

Während des Betriebs müssen Schiffe die Einhaltung geforderter Emissionsgrenzwerte nachweisen können. Dies ist bei bekannten Abgasreinigungsanlagen vor allem dann problematisch oder sogar nicht mehr möglich, wenn ein Ausfall oder eine Anomalie eines Emissionssensors wie etwa des Abgassensors 17 von Fig. 1 vorliegt. In einem solchen Fall muss oftmals eine manuelle Dokumentation der Emissionen und eine anschließende Bewertung durch einen Fachmann erfolgen. Dies ist jedoch häufig mit erhöhten Kosten verbunden oder nicht durchführbar, so dass eine Schiffsreise unterbrochen und der nächste Hafen angelaufen werden muss, um geeignete Reparaturen an der Abgasreinigungsanlage vorzunehmen.

Zur Behebung solcher Schwierigkeiten sind das erfindungsgemäße System und das erfindungsgemäße Verfahren vorgesehen, die außer dem Emissionssignal des Abgassensors 17 die Signale der weiteren Sensoren 23, 24 verwenden, um insgesamt einen Prozesszustand der Abgasreinigungsanlage 10 zu beschreiben und um nachzuweisen zu können, dass die Abgasreinigungsanlage 10 auch bei einem Ausfall oder einer Anomalie des Abgassensors 17 korrekt arbeitet und Emissionen in der Form des gereinigten Abgases 15 ausstößt, welches die geforderten Grenzwerte einhält.

Fig. 2 zeigt schematisch ein Verfahren 100 zum Betreiben der in Fig. 1 dargestellten Abgasreinigungsanlage 10. Bei Schritt 110 wird ein Emissionssignal des Emissions- bzw. Abgassensors 17 erfasst, während bei Schritt 120 Messsignale der weiteren Sensoren 23, 24 erfasst werden. Das Emissionssignal gibt die Konzentration von Emissionen an, die aus der Abgasreinigungsanlage 10 austreten, d.h. den Emissionsgehalt des gereinigten Abgases 15, während die Messsignale der weiteren Sensoren 23, 24 mit der Abgasreinigungsanlage 10 direkt oder indirekt in Beziehung stehen, wie vorstehend erläutert ist. Die Emissionen werden beispielsweise als SO₂-Konzentration und/oder CO₂-Konzentration im Abgas in ppm oder Vol.-% angegeben.

Bei Schritt 130 werden das Emissionssignal und die Signale der weiteren Sensoren bewertet. Im Einzelnen werden Signale der Sensoren 17, 23, 24 mit jeweiligen Gültigkeitskriterien verglichen. Ferner stellen die Messsignale der weiteren Sensoren Prozessparameter dar, oder sie ermöglichen die Ermittlung weiterer Prozessparameter der Abgasreinigungsanlage 10, um insgesamt einen Prozesszustand der Abgasreinigungsanlage 10 zu beschreiben. Beispielsweise können Informationen über die Leistung des Schiffsmotors und die Beschleunigung des Schiffs verwendet werden, um mittels eines Modells die Menge des unbehandelten Abgases 13 zu schätzen, die von dem Scrubber 11 aufgenommen wird. Darüber hinaus wird bei Schritt 130 ermittelt, ob eine Anomalie des Emissionssignals und/oder des Prozesszustands vorliegt, um die anschließenden Schritte 140 bis 180 ausführen zu können, bei denen Entscheidungen über den Betrieb der Abgasreinigungsanlage 10 getroffen werden. Die Schritte 140 bis 180 führen letztlich entweder bei 200 zu einer Ausgabe eines konformen Emissionszustands, der die korrekte Funktionalität der Abgasreinigungsanlage 10 innerhalb von gesetzlich vorgeschriebenen Grenzwerten angibt, oder bei 210 zu einer spezifischen Fehlermeldung.

Bei 140 wird anhand der Prozessparameter, die auf den Messsignalen der weiteren Sensoren 23, 24 beruhen, ermittelt, ob ein nicht bewertbarer Betriebszustand der Abgasreinigungsanlage 10 vorliegt. Ein solcher nicht bewertbarer Betriebszustand umfasst beispielsweise, dass der Scrubber 11 momentan ausgeschaltet ist oder sich in einem Betriebsübergang mit Neustart befindet. Liegt ein nicht bewertbarer Betriebszustand vor, wird bei 210 eine entsprechende Fehlermeldung ausgegeben.

Liegt jedoch bei 140 ein Betriebszustand vor, der bewertet werden kann, wird bei Schritt 150 ermittelt, ob das Emissionssignal des Abgassensors 17 einem vorgegebenen Gültigkeitskriterium genügt. Mit anderen Worten wird bei 150 überprüft, ob eine Anomalie des Emissions- oder Abgassensors 17 an sich vorliegt. Eine solche Anomalie liegt dann vor, wenn der Emissions- bzw. Abgassensor 17 ausgefallen ist oder wenn unerwartete Driften oder Sprünge in dem Emissionssignal auftreten.

Wenn bei 150 ermittelt wird, dass das Emissionssignal verfügbar ist und gültig ist, d.h. dass kein Ausfall des Emissionssensors vorliegt und plausible Werte für das Emissionssignal vorliegen, wird bei 160 ermittelt, ob das Emissionssignal oberhalb eines vordefinierten Grenzwerts bzw. Limits liegt, der bzw. das beispielsweise gesetzlich vorgegeben ist. Liegt die Menge der mittels des Abgassensors 17 nachgewiesenen Emissionen unterhalb des Grenzwerts, wird bei 200 ausgegeben, dass momentan ein konformer Emissionszustand vorliegt. Liegt das Emissionssignal oberhalb des vordefinierten Grenzwerts, wird bei 170 ermittelt, ob eine kurzzeitige erlaubte Grenzüberschreitung vorliegt.

Eine kurzzeitige Grenzüberschreitung ist beispielsweise für das Emissionssignal zulässig, wenn für eine bestimmte Zeitdauer eine Beschleunigung des Schiffs erfolgt, die mit einer erhöhten Leistung des Schiffsmotors und dadurch mit einer erhöhten Menge des unbehandelten Abgases 13 verbunden ist. Das Vorliegen einer kurzzeitigen, erlaubten Grenzüberschreitung kann daher beispielsweise mittels eines Beschleunigungssensors ermittelt werden, der zu den Sensoren 24 gehört (vgl. Fig. 1). Die maximale Zeitdauer einer erlaubten Grenzüberschreitung wird momentan jedoch von den Gesetzgebern noch nicht im Einzelnen vorgegeben. Es ist jedoch zu erwarten, dass eine solche maximale Zeitdauer im Bereich von Minuten liegt und deutlich kürzer als eine Stunde ist. Wenn bei 170 eine kurzzeitige erlaubte Grenzüberschreitung ermittelt wird, wird wiederum bei 200 ein konformer Emissionszustand ausgegeben.

Wenn jedoch entweder bei 150 ein fehlendes oder nicht gültiges Emissionssignals ermittelt wird oder bei 170 ermittelt wird, dass keine kurzzeitige erlaubte Grenzüberschreitung vorliegt, wird bei 180 anhand der Prozessparameter bzw. der Messsignale der weiteren Sensoren 23, 24 überprüft, ob der Prozess zulässig ist bzw. korrekt arbeitet. Zunächst wird ermittelt, ob eine ausreichende Anzahl von gültigen Prozessparametern verfügbar ist, um den Emissionszustand bewerten zu können. Im Einzelnen wird jeder der weiteren Sensoren 23, 24 bezüglich einer Anomalie überprüft, wobei ermittelt wird, ob der jeweilige weitere Sensor 23, 24 ausgefallen ist, und wenn dies nicht der Fall ist, ob das Messignal des jeweiligen weiteren Sensors 23, 24 plausibel ist. Wenn eine ausreichende Anzahl gültiger Prozessparameter anhand der Messsignale der weiteren Sensoren 23, 24 ermittelt werden kann, wird anschließend ermittelt, ob die Messsignale der Sensoren 23, 24 bzw. die anhand dieser ermittelten Prozessparameter jeweils vorbestimmten Gültigkeitskriterien genügen, die einem konformen Emissionszustand entsprechen. Wenn auch dies der Fall ist, wird bei 170 angenommen, dass der Prozess korrekt arbeitet. Ein korrekt arbeitender Prozess umfasst beispielsweise, dass der pH-Wert des Waschwassers, das aus der Wasseraufbereitung 21 austritt, zwischen vorbestimmten Grenzwerten liegt.

Eine Emissionsmenge, die aus der Abgasreinigungsanlage 10 austritt und z.B. den Schwefelgehalt in den gereinigten Abgas 15 umfasst, kann ferner anhand der Prozessparameter unter Verwendung eines Modells geschätzt werden. Diese geschätzte Emissionsmenge stellt somit einen Ersatzwert für das Emissionssignal dar, das aufgrund einer Anomalie des Emissions- bzw. Abgassensors 17 nicht verfügbar oder nicht brauchbar ist. Liegt die geschätzte Emissionsmenge unterhalb des vorstehend beschriebenen gesetzlichen Grenzwerts, wird anschließend wiederum bei 200 ein konformer Emissionszustand ausgegeben. Wenn jedoch bei 170 ermittelt wird, dass der Reinigungsprozess des Scrubbers 11 nicht korrekt arbeitet, erfolgt bei 210 die Ausgabe einer spezifischen Fehlermeldung.

Wie vorstehend erläutert ist, umfasst die spezifische Fehlermeldung bei 210, dass entweder ein nicht bewertbarer Betriebszustand vorliegt oder dass der Reinigungsprozess im Scrubber 11 nicht korrekt arbeitet. Die spezifische Fehlermeldung umfasst bei 210 ferner entweder einen Hinweis auf die mögliche Ursache des nicht bewertbaren Betriebszustand oder eine Angabe, welches Messsignal der Sensoren 17, 23, 24 einem entsprechenden Gültigkeitskriterium nicht genügt. Dadurch kann eine Fehlfunktion eines der Sensoren 17, 23, 24 frühzeitig erkannt und behoben werden.

Insgesamt ermöglicht die Bewertung des Emissionssignals und der Signale der weiteren Sensoren 23, 24 bei 130, dass bei den Schritten 140 bis 180 ermittelt werden kann, ob eine Anomalie des Emissionssignals bzw. Emissionssensors 17 und/oder eine Anomalie eines Prozesszustands der Abgasreinigungsanlage 10 vorliegt, der auf den Messsignalen der weiteren Sensoren 23, 24 beruht. Dadurch ist es möglich, einen akzeptierbaren Emissionszustand der Abgasreinigungsanlage 10 auch dann zu ermitteln, wenn eine Anomalie bzw. ein Ausfall des Emissions- bzw. Abgassensors 17 vorliegt. Der korrekte Betrieb der Abgasreinigungsanlage 10 kann folglich auch in einem solchen Fall nachgewiesen und dokumentiert werden. Somit kann die Zeitdauer maximiert werden, während derer eine korrekte Funktion der Abgasreinigungsanlage nachweisbar ist.

Wenn die Abgasreinigungsanlage 10 bei einer Anomalie des Emissions- bzw. Abgassensors 17 weiterhin korrekt arbeitet und ihre Emissionswerte unterhalb vorgegebener Grenzwerte liegen, kann der Betrieb der Abgasreinigungsanlage 10 und damit des gesamten Schiffs durch die Ausführung des Verfahrens 100 bei Ermittlung des konformen Emissionszustands (vgl. Schritt 200) ohne Unterbrechung fortgesetzt werden. Dadurch können unerwünschte Betriebsunterbrechungen, beispielsweise während einer Schiffsreise, vermieden werden, solange der Prozesszustand die Ermittlung des akzeptierbaren Emissionszustands anhand der Messsignale der weiteren Sensoren 23, 34 zulässt.

### Bezugszeichenliste

- 10: Abgasreinigungsanlage
- 11: Scrubber
- 13: unbehandeltes Abgas
- 15: gereinigtes Abgas
- 16: Meerwasser
- 17: Abgassensor
- 19: elektronische Verarbeitungseinheit
- 21: Einrichtung zur Wasseraufbereitung
- 23: weitere Sensoren der Abgasreinigungsanlage
- 24: weitere Sensoren des Schiffs
- 25: Schlammbehälter
- 27: Waschwasser-Rückführung
- 100: Verfahren
- 110-210: Verfahrensschritte

## Patentansprüche

1. System zum Überwachen einer Abgasreinigungsanlage (10), die mit einer Emissionsquelle, insbesondere mit einem Schiffsmotor, funktional verbunden ist, wobei das System umfasst:
einen Emissionssensor (17), der ein Emissionssignal erfasst,
mehrere weitere Sensoren (23, 24), die jeweilige mit der Abgasreinigungsanlage (10) in Beziehung stehende Messsignale ausgeben, und
eine elektronische Verarbeitungseinheit (19), die ausgebildet ist, um anhand der Messsignale der weiteren Sensoren (23, 24) einen Prozesszustand der Abgasreinigungsanlage (10) zu ermitteln,
**dadurch gekennzeichnet, dass**
das Emissionssignal, das der Emissionssensor (17) erfasst, Emissionen der Emissionsquelle bei dem Austreten aus der Abgasreinigungsanlage (10) angibt, und
die elektronische Verarbeitungseinheit (19) ferner ausgebildet ist, um das Emissionssignal und den Prozesszustand jeweils bezüglich einer Anomalie zu bewerten, indem:
die elektronische Verarbeitungseinheit (19) ermittelt, ob das Emissionssignal des Emissionssensors (17) einem vorbestimmten Gültigkeitskriterium oder einer Kombination vorbestimmter Gültigkeitskriterien genügt, und
die elektronische Verarbeitungseinheit (19) dann, wenn eine ausreichende Anzahl gültiger Prozessparameter anhand der Messsignale der weiteren Sensoren (23, 24) ermittelbar ist, ferner ermittelt, ob die anhand der jeweiligen Messsignale der Sensoren (23, 24) ermittelten Prozessparameter jeweils vorbestimmten Gültigkeitskriterien genügen, und
einen konformen Emissionszustand, der eine korrekte Funktionalität der Abgasreinigungsanlage (10) angibt, dann zu ermitteln und auszugeben, wenn keine Anomalie des Emissionssignals vorliegt und wenn eine Anomalie des Emissionssignals vorliegt, während gleichzeitig keine Anomalie des Prozesszustands vorliegt oder die Anomalie des Emissionssignals einer Ausnahmebedingung genügt.

2. System nach Anspruch 1,
wobei die Ausnahmebedingung umfasst, dass das Emissionssignal für weniger als eine vorbestimmte Zeitdauer von einem Normalzustand abweicht, der durch eines oder mehrere der vorbestimmten Gültigkeitskriterien für das von dem Emissionssensor (17) erfasste Emissionssignal festgelegt ist.

3. System nach Anspruch 1 oder 2,
wobei die elektronische Verarbeitungseinheit (19) eine spezifische Fehlermeldung ausgibt, wenn eine Anomalie des Prozesszustands vorliegt und wenn die Anomalie des Emissionssignals der Ausnahmebedingung nicht genügt.

4. System nach einem der vorstehenden Ansprüche,
wobei die elektronische Verarbeitungseinheit (19) anhand der Messignale der weiteren Sensoren (23, 24) ein Ersatzsignal für das Emissionssignal berechnet, wenn eine Anomalie des Emissionssignals und keine Anomalie des Prozesszustands vorliegt.

5. System nach Anspruch 4,
wobei die elektronische Verarbeitungseinheit (19) den konformen Emissionszustand anhand des Emissionssignals ermittelt, wenn keine Anomalie des Emissionssignals vorliegt, und den konformes Emissionszustand anhand des Ersatzsignals ermittelt, wenn eine Anomalie des Emissionssignals und keine Anomalie des Prozesszustands vorliegt.

6. System nach einem der vorstehenden Ansprüche,
wobei die elektronische Verarbeitungseinheit (19) die Anzahl gültiger Prozessparameter ermittelt, die anhand der Messsignale der weiteren Sensoren (23, 24) bestimmbar sind, und den Prozesszustand nur dann bezüglich einer Anomalie bewertet, wenn die Anzahl der gültigen Prozessparameter größer als ein vorbestimmter Wert ist, und ansonsten eine spezifische Fehlermeldung ausgibt.

7. System nach einem der vorstehenden Ansprüche,
wobei die elektronische Verarbeitungseinheit (19) die Ermittlung und die Ausgabe des Emissionszustands unterdrückt, wenn die elektronische Verarbeitungseinheit (19) anhand zumindest eines der Messsignale der weiteren Sensoren (23, 24) einen nicht bewertbaren Betriebszustand der Abgasreinigungsanlage (10) ermittelt, und eine spezifische Fehlermeldung für den nicht bewertbaren Betriebszustand ausgibt.

8. System nach einem der vorstehenden Ansprüche,
das ferner einen weiteren Emissionssensor (17) umfasst, der ein weiteres Emissionssignal erfasst, und
wobei die elektronische Verarbeitungseinheit (19) ferner ausgebildet ist, um:
das weitere Emissionssignal bezüglich einer Anomalie zu bewerten und
einen konformen Emissionszustand der Abgasreinigungsanlage (10) dann zu ermitteln und auszugeben, wenn keine Anomalie der Emissionssignale vorliegt und wenn eine Anomalie zumindest eines der Emissionssignale vorliegt, während gleichzeitig keine Anomalie des Prozesszustands ermittelt wird oder die Anomalie der Emissionssignale einer jeweiligen Ausnahmebedingung genügt.

9. Verfahren zum Überwachen einer Abgasreinigungsanlage (10), die mit einer Emissionsquelle, insbesondere mit einem Schiffsmotor, funktional verbunden ist, wobei das Verfahren umfasst, dass:
ein Emissionssignal mittels eines Emissionssensors (17) erfasst wird,
Messsignale, die jeweils mit der Abgasreinigungsanlage (10) in Beziehung stehen, von mehreren weiteren Sensoren (23, 24) erfasst werden,
anhand der Messsignale der weiteren Sensoren (23, 24) ein Prozesszustand der Abgasreinigungsanlage (10) ermittelt wird,
**dadurch gekennzeichnet, dass**
das Emissionssignal Emissionen der Emissionsquelle bei dem Austreten aus der Abgasreinigungsanlage (10) angibt,
das Emissionssignal und der Prozesszustand jeweils bezüglich einer Anomalie bewertet werden, indem:
ermittelt wird, ob das Emissionssignal des Emissionssensors (17) einem vorgegebenen Gültigkeitskriterium genügt, und
dann, wenn eine ausreichende Anzahl gültiger Prozessparameter anhand der Messsignale der weiteren Sensoren (23, 24) ermittelbar ist, ferner ermittelt wird, ob die anhand der jeweiligen Messsignale der Sensoren (23, 24) ermittelten Prozessparameter jeweils vorbestimmten Gültigkeitskriterien genügen, und
ein konformer Emissionszustand, der eine korrekte Funktionalität der Abgasreinigungsanlage (10) angibt, dann ermittelt und ausgegeben wird, wenn keine Anomalie des Emissionssignals vorliegt und wenn eine Anomalie des Emissionssignals vorliegt, während gleichzeitig keine Anomalie des Prozesszustands ermittelt wird oder die Anomalie des Emissionssignals einer Ausnahmebedingung genügt.

## Claims

1. A system for monitoring an exhaust gas purification system (10) which is functionally connected to an emission source, in particular to a ship's engine, wherein the system comprises:
an emission sensor (17) which acquires an emission signal,
a plurality of further sensors (23, 24) which output respective measurement signals related to the exhaust gas purification system (10), and
an electronic processing unit (19) which is configured to determine a process state of the exhaust gas purification system (10) based on the measurement signals of the further sensors (23, 24),
**characterized in that**
the emission signal acquired by the emission sensor (17) indicates emissions of the emission source on the exiting from the exhaust gas purification system (10), and
the electronic processing unit (19) is further configured to assess the emission signal and the process state in each case with respect to an anomaly **in that**:
the electronic processing unit (19) determines whether the emission signal of the emission sensor (17) fulfills a predetermined validity criterion or a combination of predetermined validity criteria, and
the electronic processing unit (19) then, if a sufficient number of valid process parameters can be determined based on the measurement signals of the further sensors (23, 24), further determines whether the process parameters determined based on the respective measurement signals of the sensors (23, 24) each fulfill predetermined validity criteria, and
to determine and to output a compliant emission state, which indicates a correct functionality of the exhaust gas purification system (10), when no anomaly of the emission signal is present and when an anomaly of the emission signal is present while at the same time no anomaly of the process state is present or the anomaly of the emission signal satisfies an exception condition.

2. A system according to claim 1,
wherein the exception condition comprises that the emission signal deviates for less than a predetermined time period from a normal state which is defined by one or more of the predetermined validity criterions for the emission signal acquired by the emission sensor (17).

3. A system according to claim 1 or 2,
wherein the electronic processing unit (19) outputs a specific error message when an anomaly of the process state is present and when the anomaly of the emission signal does not satisfy the exception condition.

4. A system according to any one of the preceding claims,
wherein the electronic processing unit (19) calculates a substitute signal for the emission signal based on the measurement signals of the further sensors (23, 24) when an anomaly of the emission signal is present and no anomaly of the process state is present.

5. A system according to claim 4,
wherein the electronic processing unit (19) determines the compliant emission state based on the emission signal when no anomaly of the emission signal is present and determines the compliant emission state based on the substitute signal when an anomaly of the emission signal is present and no anomaly of the process state is present.

6. A system according to any one of the preceding claims,
wherein the electronic processing unit (19) determines the number of valid process parameters which can be determined based on the measurement signals of the further sensors (23, 24) and only assesses the process state with respect to an anomaly when the number of valid process parameters is greater than a predetermined value, and otherwise outputs a specific error message.

7. A system according to any one of the preceding claims,
wherein the electronic processing unit (19) suppresses the determination and the output of the emission state when the electronic processing unit (19) determines a non-assessable operating state of the exhaust gas purification system (10) based on at least one of the measurement signals of the further sensors (23, 24), and outputs a specific error message for the non-assessable operating state.

8. A system according to any one of the preceding claims,
that further comprises a further emission sensor (17) which acquires a further emission signal, and
wherein the electronic processing unit (19) is further configured:
to assess the further emission signal with respect to an anomaly and
to then determine and to output a compliant emission state of the exhaust gas purification system (10) when no anomaly of the emission signals is present and when an anomaly of at least one of the emission signals is present while at the same time no anomaly of the process state is determined or the anomaly of the emission signals satisfies a respective exception condition.

9. A method for monitoring an exhaust gas purification system (10) which is functionally connected to an emission source, in particular to a ship's engine, wherein the method comprises that:
an emission signal is acquired by means of an emission sensor (17),
measurement signals which are each related to the exhaust gas purification system (10) are acquired by a plurality of further sensors (23, 24),
a process state of the exhaust gas purification system (10) is determined based on the measurement signals of the further sensors (23, 24),
**characterized in that**
the emission signal indicates emissions of the emission source on the exiting from the exhaust gas purification system (10),
the emission signal and the process state are assessed with respect to an anomaly in each case **in that**:
it is determined whether the emission signal of the emission sensor (17) fulfills a predetermined validity criterion, and
then, if a sufficient number of valid process parameters can be determined based on the measurement signals of the further sensors (23, 24), it is further determined whether the process parameters determined based on the respective measurement signals of the sensors (23, 24) each fulfill predetermined validity criteria, and
a compliant emission state which indicates a correct functionality of the exhaust gas purification system (10) is then determined and output when no anomaly of the emission signal is present and when an anomaly of the emission signal is present while at the same time no anomaly of the process state is determined or the anomaly of the emission signal satisfies an exception condition.

## Revendications

1. Système de surveillance d'un dispositif de purification des gaz d'échappement (10) relié de manière fonctionnelle à une source d'émissions, en particulier à un moteur marin, le système comprenant :
un capteur d'émissions (17) qui saisit un signal d'émissions,
une pluralité d'autres capteurs (23, 24) qui émettent des signaux de mesure respectifs en relation avec le dispositif de purification des gaz d'échappement (10), et
une unité de traitement électronique (19) conçue pour déterminer un état de processus du dispositif de purification des gaz d'échappement (10) à l'aide des signaux de mesure des autres capteurs (23, 24),
**caractérisé en ce que**
le signal d'émissions que saisit le capteur d'émissions (17) indique les émissions de la source d'émissions à la sortie du dispositif de purification des gaz d'échappement (10), et
**en ce que** l'unité de traitement électronique (19) est en outre conçue pour évaluer le signal d'émissions et l'état de processus par rapport à une anomalie respective, du fait que
l'unité de traitement électronique (19) détermine si le signal d'émissions du capteur d'émissions (17) satisfait à un critère de validité prédéfinie ou à une combinaison de critères de validité prédéfinis, et lorsqu'un nombre suffisant de paramètres de processus valides peut être déterminé à l'aide des signaux de mesure des autres capteurs (23, 24), l'unité de traitement électronique (19) détermine en outre si les paramètres de processus déterminés à l'aide des signaux de mesure respectifs des capteurs (23, 24) satisfont à des critères de validité prédéfinis respectifs,
et pour déterminer et émettre un état d'émissions conforme, indiquant un fonctionnement correct du dispositif de purification des gaz d'échappement (10), lorsqu'il n'y a pas d'anomalie du signal d'émissions ou lorsqu'il y a une anomalie du signal d'émissions alors que, simultanément, il n'y a pas d'anomalie de l'état de processus ou que l'anomalie du signal d'émissions satisfait à une condition d'exception.

2. Système selon la revendication 1,
dans lequel la condition d'exception consiste en ce que le signal d'émissions s'écarte, pendant moins d'une période de temps prédéfinie, d'un état normal défini par un ou plusieurs des critères de validité prédéfinis pour le signal d'émissions saisi par le capteur d'émissions (17).

3. Système selon la revendication 1 ou 2,
dans lequel l'unité de traitement électronique (19) émet un message d'erreur spécifique lorsqu'il y a une anomalie de l'état de processus et lorsque l'anomalie du signal d'émissions ne satisfait pas à la condition d'exception.

4. Système selon l'une des revendications précédentes,
dans lequel l'unité de traitement électronique (19) calcule un signal de remplacement du signal d'émissions à l'aide des signaux de mesure des autres capteurs (23, 24) lorsqu'il y a une anomalie du signal d'émissions et qu'il n'y a pas d'anomalie de l'état de processus.

5. Système selon la revendication 4,
dans lequel l'unité de traitement électronique (19) détermine l'état d'émissions conforme à l'aide du signal d'émissions lorsqu'il n'y a pas d'anomalie du signal d'émissions, et détermine l'état d'émissions conforme à l'aide du signal de remplacement lorsqu'il y a une anomalie du signal d'émissions et qu'il n'y a pas d'anomalie de l'état de processus.

6. Système selon l'une des revendications précédentes,
dans lequel l'unité de traitement électronique (19) détermine le nombre de paramètres de processus valides qui peuvent être définis à l'aide des signaux de mesure des autres capteurs (23, 24), et évalue l'état de processus par rapport à une anomalie uniquement si le nombre de paramètres de processus valides est supérieur à une valeur prédéfinie, et émet un message d'erreur spécifique dans le cas contraire.

7. Système selon l'une des revendications précédentes,
dans lequel l'unité de traitement électronique (19) supprime la détermination et la sortie de l'état d'émissions lorsque l'unité de traitement électronique (19) détermine, à l'aide d'au moins l'un des signaux de mesure des autres capteurs (23, 24), un état de fonctionnement non évaluable du dispositif de purification des gaz d'échappement (10), et émet un message d'erreur spécifique à l'état de fonctionnement non évaluable.

8. Système selon l'une des revendications précédentes,
comprenant en outre un autre capteur d'émissions (17) qui saisit un autre signal d'émissions,
l'unité de traitement électronique (19) étant en outre conçue pour
évaluer l'autre signal d'émissions par rapport à une anomalie, et déterminer et émettre un état d'émissions conforme du dispositif de purification de gaz d'échappement (10) lorsqu'il n'y a pas d'anomalie des signaux d'émissions et lorsqu'il y a une anomalie d'au moins l'un des signaux d'émissions alors qu'en même temps il n'y a pas d'anomalie déterminée de l'état de processus ou que l'anomalie des signaux d'émissions satisfait à une condition d'exception respective.

9. Procédé de surveillance d'un dispositif de purification des gaz d'échappement (10) relié de manière fonctionnelle à une source d'émissions, en particulier à un moteur marin, le procédé consistant à :
saisir un signal d'émissions au moyen d'un capteur d'émissions (17), saisir, au moyen d'une pluralité d'autres capteurs (23, 24), des signaux de mesure qui sont chacun en relation avec le dispositif de purification des gaz d'échappement (10),
déterminer un état de processus du dispositif de purification des gaz d'échappement (10) à l'aide des signaux de mesure des autres capteurs (23, 24),
**caractérisé en ce que**
le signal d'émissions indique les émissions de la source d'émissions à la sortie du dispositif de purification des gaz d'échappement (10),
le signal d'émission et l'état de processus sont évalués chacun par rapport à une anomalie en prévoyant de
déterminer si le signal d'émissions du capteur d'émissions (17) satisfait à un critère de validité prédéfinie, et
lorsqu'un nombre suffisant de paramètres de processus valides peut être déterminé à l'aide des signaux de mesure des autres capteurs (23, 24), déterminer en outre si les paramètres de processus déterminés à l'aide des signaux de mesure respectifs des capteurs (23, 24) satisfont à des critères de validité prédéfinis respectifs, et déterminer et émettre un état d'émissions conforme, indiquant un fonctionnement correct du dispositif de purification des gaz d'échappement (10), lorsqu'il n'y a pas d'anomalie du signal d'émissions et lorsqu'il y a une anomalie du signal d'émissions alors qu'en même temps il n'y a pas d'anomalie déterminée de l'état de processus ou que l'anomalie du signal d'émissions satisfait à une condition d'exception.
